(19) Europäisches Patentamt European Patent Office Office européen des brevets

(11) **EP 2 212 891 B1**

(12) **FASCICULE DE BREVET EUROPEEN**

(45) Date de publication et mention de la délivrance du brevet:
**16.09.2015 Bulletin 2015/38**

(21) Numéro de dépôt: **08841914.8**

(22) Date de dépôt: **09.10.2008**

(51) Int Cl.:
**G21C 17/108** (2006.01) **G21C 17/10** (2006.01)

(86) Numéro de dépôt international:
**PCT/FR2008/051834**

(87) Numéro de publication internationale:
**WO 2009/053624 (30.04.2009 Gazette 2009/18)**

(54) **PROCÉDÉ D'ÉTABLISSEMENT DE CARTOGRAPHIES INCORE MIXTES ET APPLICATION AU CALIBRAGE DE L'INSTRUMENTATION FIXE**

VERFAHREN ZUM ERSTELLEN GEMISCHTER IN-CORE KARTIERUNGEN UND ANWENDUNG DESSELBEN ZUM KALIBRIEREN DER STATIONÄREN KERNINSTRUMENTIERUNG

METHOD OF PRODUCING MIXED IN-CORE MAPS AND APPLICATION TO THE CALIBRATION OF FIXED INSTRUMENTATION

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **12.10.2007 FR 0758301**

(43) Date de publication de la demande:
**04.08.2010 Bulletin 2010/31**

(73) Titulaire: **Areva NP**
**92400 Courbevoie (FR)**

(72) Inventeur: **RIO, Gérard**
**F-78100 Saint Germain en Laye (FR)**

(74) Mandataire: **Camus, Olivier Jean-Claude et al**
**Cabinet Camus Lebkiri**
**25, Rue de Maubeuge**
**75009 Paris (FR)**

(56) Documents cités:
**EP-A- 0 323 280      EP-A- 0 396 321**
**EP-A- 1 197 970      EP-A2- 1 585 140**
**FR-A- 2 438 895      US-A- 3 879 612**

EP 2 212 891 B1

**Description**

DOMAINE TECHNIQUE DE L'INVENTION

L'invention concerne un procédé d'établissement de cartographies dites INCORE mixtes. La présente invention se réfère également à une application d'un tel procédé au calibrage de l'instrumentation de type fixe. Les cartographies INCORE sont des cartographies illustrant une distribution de puissance au sein des réacteurs nucléaires, établies au moyen de capteurs qui sont placés, de manière fixe ou mobile, et de manière temporaire ou permanente, dans le coeur du réacteur. Elle a essentiellement pour objectif de compenser une perte de densité d'une instrumentation de référence, dite instrumentation RIC - ou système RIC- lorsqu'un nombre significatif d'emplacements initialement utilisés par les capteurs du système RIC sont occupés par des cannes fixes de type collectrons. Un intérêt physique évident réside dans l'augmentation de la densité de mesure, et donc dans le degré de confiance associé aux résultats d'exploitation déduits du traitement de ces mesures (cf aussi EP0323280, par exemple).

Une application du procédé selon l'invention réside dans un procédé de calibrage de détecteurs de type collectrons disposés dans le coeur d'un réacteur nucléaire. Une telle application du procédé selon l'invention permet de disposer d'un signal, fourni par un détecteur de type collectron, associé à une composante d'incertitude dont la valeur n'est pas trop élevée, même après une utilisation prolongée du collectron dans le coeur de réacteur nucléaire. On désigne par les termes "calibrage de collectron" le fait d'associer un signal, fourni par un collectron, représentatif d'une activité au sein d'un réacteur nucléaire avec une composante d'incertitude associée au détecteur de type collectron considéré.

Le présent document fera référence à un ensemble de sigles ou expressions, notamment dans différentes équations et relations, dont un glossaire est donné ci-dessous :

- *C / M :* écart Calcul / Mesure
- $\boldsymbol{\mu}_U^N$ : incertitude associée au calcul de la distribution de puissance locale crayon dans un assemblage
- $\boldsymbol{R}_{U1}^N$ : incertitude associée à la transposition des écarts C/M sur un paramètre de type 'activité' à un paramètre de type 'puissance'
- $\boldsymbol{R}_{U2}^N$ : incertitude associée à la propagation spatiale des écarts C/M
- $\boldsymbol{M}_U^N$ : incertitude associée au système de mesure (détecteur et acquisition)
- $\boldsymbol{E}_U^N$ : incertitude globale classique sur le processus de reconstruction de puissance
- *C / PM :* écart Calcul / Pseudo Mesure
- $\boldsymbol{R}_{U2p}^N$ : incertitude d'extension généralisée des écarts C/PM
- $\boldsymbol{E}_{Up}^N$ : incertitude globale, suivant la méthodologie RUN2p, sur le processus de reconstruction de puissance
- *SchX :* schéma d'instrumentation quelconque de type X
- *REF :* schéma d'instrumentation de référence
- *S*(*t*) *:* sensibilité d'un détecteur au bout d'un temps t d'irradiation
- *S*(0) : sensibilité initiale d'un détecteur neuf
- *Q*(*t*) *:* intégration du courant délivré par un détecteur au bout d'un temps t d'irradiation
- $Q_\infty$ : charge initiale disponible pour un détecteur neuf
- *a :* exposant de la loi d'usure expérimentale
- *A1 et A2 :* distributions des activités associées aux détecteurs de types 1 et 2 respectivement
- *N1 et N2 :* nombres d'acquisitions pour les détecteurs de types 1 et 2 respectivement
- $A_1^{MES}$ *et* $A_2^{MES}$ : distributions des activités mesurées par les détecteurs de types 1 et 2 respectivement
- $A_1^{CAL}$ *et* $A_2^{CAL}$ : distributions des activités équivalentes calculées pour les détecteurs de types 1 et 2 respectivement.
- $A_{1 \leftarrow 2}^{CONV}$ : conversion d'une activité vue par un détecteur de type 2 en une activité qui serait vue par un détecteur de type 1
- *brut :* se rapporte normalement à une distribution dont les éléments n'ont subi aucun processus de normalisation
- *relatif :* se rapporte à une distribution dont les éléments sont liés par une normalisation d'ensemble
- *g :* coefficient rendant compte des différences de normalisation entre deux distributions
  *complet :* caractérise une distribution dont tous les éléments sont utilisés

- $\sigma\left(T_U^N\right) T_U^N$ : écart type et incertitude associés au processus de construction d'une cartographie mixte

- $\sigma\left(\Lambda_U^N\right)$ et $\Lambda_U^N$ : écart type et incertitude associés au calcul des activités A

- $r$ : coefficient de corrélation linéaire

  *conversion* : se rapporte à l'action de transformer une acquisition d'un détecteur d'un type donné en une acquisition qui aurait pu être obtenue au même instant et au même endroit par un détecteur d'un autre type.

- $A_{COL}^{BRUT}$ : activité brute, pour la position 3D XYZ, déduite des acquisitions d'un détecteur de type 2 (ici COL).

- $A_{PRIC}^{BRUT}$ : activité brute, pour la position 3D XYZ, initialement de type 2 et convertie en activités de type 1 (ici PRIC).

- $A_{RIC}^{EST}$ : activité estimée, pour la position 3D XYZ, de type 1 (ici RIC).

- *FCOR* : facteur de correction ou de calibrage 3D.

  $A_{COL}^{COR}$ : activité corrigée, pour la position 3D XYZ, de type 2 (ici COL).

- $A_{PRIC}^{COR}$ : activité corrigée, pour la position XYZ, de type 1 après conversion (ici PRIC).

- $C_U^N$ : incertitude associée au processus de calibrage d'un détecteur 2 à partir des acquisitions simultanées d'un détecteur 1.

Le domaine de l'invention est, d'une façon générale, celui des réacteurs nucléaires. Les réacteurs nucléaires, tels que les réacteurs nucléaires refroidis par de l'eau sous pression, comportent un coeur constitué par des assemblages de combustible, chaque assemblage se composant d'une pluralité de crayons de combustible, notamment de l'uranium légèrement enrichi avec l'isotope 235 ; les assemblages sont disposés de manière juxtaposée avec leurs axes longitudinaux dans la direction verticale, c'est-à-dire suivant la hauteur du coeur.

D'une manière générale, dans la suite du document, les axes longitudinaux sont ainsi repérés par l'élévation z, les abscisses x et ordonnées y permettant la détermination d'un point du réacteur nucléaire dans un plan horizontal. On peut ainsi considérer qu'un coeur de réacteur nucléaire est découpé en tranches, ou mailles axiales, d'une certaine épaisseur , repérées par l'élévation z ; on repère par ailleurs un point d'un réacteur nucléaire par sa position azimutale, à partir d'un angle défini dans un plan horizontal, par rapport à l'axe z des cotes du repère tridimensionnel orthogonal (x,y,z), et par sa position radiale, définie par une distance, dans un plan horizontal, entre le point considéré et l'axe des côtes.

La puissance dégagée par les assemblages, puissance directement corrélée au flux neutronique généré par le combustible présent dans lesdits assemblages, ne se répartit pas de façon uniforme à l'intérieur du volume du réacteur. Il existe des endroits où la puissance est plus élevée qu'en d'autres, typiquement au centre du réacteur par comparaison à la périphérie. On parle alors de points chauds ; c'est au niveau de ces points que la puissance fournie se rapproche le plus des limites de conception du coeur du réacteur nucléaire. En conséquence, la distribution de puissance dans un coeur de réacteur nucléaire n'est pas homogène ; la réalisation d'une cartographie complète de puissance dans le coeur, appelée distribution de puissance 3D, qui est une opération fondamentale pour des raisons de sécurité évidentes, est donc une opération complexe.

Ainsi, la conduite et la sécurisation des réacteurs nucléaires nécessitent de déterminer l'énergie fournie par les fissions des noyaux d'uranium 235, donc la puissance nucléaire, en chaque point du réacteur nucléaire. A cet effet, des mesures sont effectuées pour évaluer la puissance en différents points du coeur du réacteur. Dans tous les cas, l'évaluation de cette puissance fait intervenir des mesures des rayonnements émis par le coeur du réacteur, et plus particulièrement du flux de neutrons.

La mesure d'un flux de neutrons fait toujours intervenir une interaction neutron/matière qui va créer des particules susceptibles de produire un courant électrique mesurable. Après chaque absorption d'un neutron, les atomes de la matière sensible constituant le capteur vont se transformer ; la matière sensible en tant que telle va donc disparaitre progressivement. Cette disparition est réalisée à une vitesse qui est fonction de l'intensité du flux neutronique et de la probabilité d'occurrence de la réaction, elle-même directement liée à la section efficace d'absorption. Plus cette probabilité est élevée et plus le courant fourni est fort mais, en contrepartie, plus la matière sensible disparaît rapidement ce qui nécessite alors de remplacer le capteur très rapidement.

Le problème de l'épuisement de la matière sensible se pose donc de manière cruciale pour un capteur neutronique situé en permanence à l'intérieur du coeur.

Pour répondre à ce problème sensible d'épuisement des capteurs, de nombreux constructeurs de réacteurs nucléaires ont choisi de ne pas laisser à demeure les capteurs en position de mesure dans le coeur, et d'envoyer ceux-ci dans le réacteur uniquement pour faire des relevés par intermittence. Des capteurs traditionnellement utilisés sont ainsi désignés par l'expression "instrumentation interne mobile", qui seront dans la suite de la description désignés, à titre d'exemple uniquement, comme système RIC (Réacteur Instrumentation Coeur). D'autres systèmes, comme par exemple le système aéroball, peuvent également être considérés comme un système de référence d'instrumentation interne mobile.

La fonction du système RIC est de mesurer précisément la distribution de flux dans le coeur du réacteur, avec des contraintes relativement faibles en terme de temps de réponse. Aussi, dans la pratique, le système RIC coexiste avec un système de contrôle dit système RPN (réacteur protection nucléaire), disposé à l'extérieur du coeur du réacteur nucléaire, et chargé de mesurer quelques paramètres de la distribution de puissance (tels les déséquilibres axiaux et azimutaux) et le niveau de puissance avec un très bon temps de réponse, mais une moins bonne précision des mesures que le système RIC. Le système RPN est calibré périodiquement, car la proportionnalité entre la mesure externe et le niveau de puissance réel du réacteur dépend de la composante radiale de la distribution de puissance, qui elle-même varie avec l'épuisement du combustible. Les informations fournies par le système RIC peuvent être utilisées pour réaliser un tel calibrage.

D'une manière plus générale, le système RIC est utilisé dans deux circonstances distinctes:

Tout d'abord, pendant les périodes d'essais de démarrage ou après chaque rechargement des assemblages, ou en périodes d'essais particuliers, le système RIC est utilisé pour :

- vérifier que la distribution de puissance en début de cycle est conforme aux calculs de conception et en particulier que la valeur des points chauds respecte les hypothèses de conception ;
- calibrer les détecteurs du système RPN ;
- détecter une éventuelle erreur de chargement ;
- délivrer des informations sur la distribution de flux qui participent à la qualification des codes informatiques et des méthodes utilisées dans les calculs de conception du coeur du réacteur.

Ensuite, en cours de cycle et en fonctionnement normal, le système RIC est utilisée notamment pour :

- vérifier que la distribution de puissance, et en particulier les facteurs de points chauds, évoluent en fonction du temps comme les calculs de conception l'ont prévu ;
- vérifier et/ou calibrer les détecteurs du système RPN.

En terme de précision, il a été historiquement choisi un compromis entre le désir de vouloir mesurer la puissance dans un grand nombre d'assemblages, et une réalité matérielle résidant dans le fait qu'il est nécessaire de percer, pour chaque position instrumentée, un trou dans le fond de la cuve du réacteur nucléaire. Ce compromis se traduit par le fait pénalisant qu'un nombre restreint d'assemblages instrumentés a été choisi, solution avantageuse économiquement et technologiquement, mais limitant en conséquence la précision de mesure de distribution de flux, et nécessitant l'existence d'une marge, donnée par un calcul d'incertitude détaillé ultérieurement, pour couvrir une connaissance expérimentale imparfaite de la distribution de puissance 3D, notamment au niveau des points chauds.

Dans la pratique, ce sont six détecteurs mobiles de neutrons qui sont utilisés. Les détecteurs mobiles sont du type chambres à fission. Ce type de capteur neutronique consiste en une chambre d'ionisation classique et utilise l'uranium comme matière sensible aux neutrons. Le courant délivré par les détecteurs mobiles est proportionnel au taux de la réaction de fission dans le détecteur et non directement à la puissance ; on préfère ainsi souvent parler d'activité et non de puissance ; une phase de transposition des mesures d'activité vers une détermination de puissance est introduite ultérieurement dans le dépouillement des mesures réalisées. Cette transposition donne naissance à une composante d'incertitude particulière, notée $R_{U1}^N$.

Les détecteurs mobiles sont envoyés, par un dispositif d'aiguillage, dans des tubes étanches, appelés doigt de gant, placés dans un tube d'instrumentation de 60 assemblages combustibles sélectionnés à cet effet. Les assemblages combustibles sélectionnés sont appelés assemblages instrumentés. Ainsi, chaque détecteur est destiné à explorer dix assemblages. Des mécanismes font intervenir des sélecteurs de groupe pour assurer le transfert des détecteurs d'un assemblage à l'autre.

On peut préciser ici que le processus d'acquisition comporte une ou plusieurs passes supplémentaires dites d'intercalibration.

En effet, la quantité de la matière sensible, sujette à l'interaction avec les neutrons, diminue avec la durée d'irradiation du détecteur ou plus exactement de la fluence reçue par celui-ci. La sensibilité c'est-à-dire le rapport entre le courant émis et le flux vu par le détecteur va évoluer avec le temps : une correction est donc nécessaire au niveau du dépouillement pour tenir compte de cette variation. Chaque sonde mobile va évoluer différemment des autres puisqu'elle reçoit une fluence qui lui est propre, fonction de la puissance des assemblages qu'elle explore. Les passes d'intercalibration ont donc pour fonction de permettre la mesure des sensibilités relatives. La détermination des sensibilités doit se faire avant chaque carte de flux complète et elle est obligatoire. Ainsi, le calibrage des détecteurs est une opération qui consiste à agir sur le gain électrique de la chaîne de mesure afin de compenser la diminution du courant délivré par le capteur avec l'épuisement et de conserver constante la valeur indiquée. Cette opération permet également de corriger les différences entre détecteurs pouvant apparaître du fait que chacun d'entre eux a son propre système électronique d'acquisition Dans la pratique, elle est réalisée de la façon suivante :

Tous les sélecteurs de groupe s'orientent vers une position dite de secours qui permet à chacune des sondes d'aller explorer les assemblages normalement mesurés par la sonde de rang immédiatement supérieur (excepté la sonde 6 qui, par permutation circulaire, va explorer les assemblages normalement affectés à la sonde 1). On peut donc comparer les mesures obtenues lors des passes d'intercalibration pour déterminer les sensibilités relatives des sondes, et en tenir compte lors du dépouillement des mesures.

On appelle carte de flux, le résultat du dépouillement des mesures effectuées par le système d'instrumentation interne mobile lors de la scrutation des 60 assemblages sélectionnés à cet effet, c'est-à-dire une distribution partielle de taux de réaction en trois dimensions sur le coeur déterminée par les mesures réalisées.

Ainsi, bien que mesurant la distribution de flux dans un nombre significatif d'assemblages combustible - 30 % environ des assemblages sont instrumentés - le système RIC ne couvre pas, radialement, tout le coeur. Si le facteur de point chaud se trouve dans un assemblage non instrumenté, il échappe à la mesure. Il est donc nécessaire de compléter l'information délivrée par les détecteurs mobiles. Le complément d'information est apporté par le calcul théorique. L'établissement d'une distribution de puissance 3D d'un coeur de réacteur nucléaire, détaillé ci-dessous, fait donc toujours appel à une combinaison d'informations expérimentales et d'informations calculées.

D'autres systèmes d'instrumentations que le RIC peuvent équiper les réacteurs industriels. Par exemple, on peut citer ici le système Aeroball, qui est un système d'instrumentation mettant en jeu des pièces mobiles constituées par des trains de billes en acier contenant 1.5 % d'un isotope sensible tel que le Vanadium et qui circulent, en étant mus par de l'azote comprimé, dans des conduits, et qui pénètrent dans la cuve par le couvercle. La mesure de flux neutronique repose sur l'activation des billes lorsqu'elles sont placées sous flux de neutrons ; le comptage de l'activité de celles-ci se fait au moyen de détecteurs fixes placés sur des râteliers situés à l'extérieur de la cuve mais dans le bâtiment réacteur. On peut également citer le système de type collectron, qui signifie collection d'électrons, qui obéit aux principes physiques suivants : Placé dans un flux de neutrons, un corps peut émettre des électrons. L'originalité d'un collectron réside dans le fait que, sous des dimensions extrêmement réduites, le courant délivré est assez élevé et que les électrons émis sont collectés et mesurés dans un processus continu sans tension de polarisation extérieure. Les collectrons, qui sont au coeur de la présente invention, seront détaillés ultérieurement dans la suite de la description.

D'une manière générale, les données résultant du calcul de distribution de puissance, calcul théorique, correspondent à une distribution de puissance calculée à partir d'un modèle reproduisant les conditions de fonctionnement observées lors de la réalisation de la carte de flux. Ce calcul est effectué en bureau d'étude. Il respecte les principes suivants :

Le signal issu de la mesure par les détecteurs à fission est proportionnel à un taux de fission dans la partie sensible du détecteur, c'est-à-dire au produit entre la section efficace de fission et le flux. Il est donc nécessaire de calculer la section efficace de fission pour pouvoir remonter au taux d'activation du détecteur. Les modèles théoriques utilisés représentent explicitement le doigt de gant et le tube d'instrumentation afin d'approcher au mieux les conditions exactes de la mesure. La section efficace de fission est calculée en prenant en compte les conditions locales autour du tube d'instrumentation et en représentant explicitement le doigt de gant et le tube d'instrumentation pour le calcul du flux. Ce calcul est fait pour chaque assemblage instrumenté par un code de cellule, par exemple le code connu de l'homme du métier sous l'appellation APOLLO 2F. La distribution de flux est ensuite calculée par un code de diffusion par exemple le code connu de l'homme du métier sous l'appellation "code nodal tridimensionnel SMART". Les informations calculées sont alors les suivantes :

- la distribution 3D des puissances moyennes par assemblage. Cette distribution de puissance PM CAL (x, y, z) intervient dans la phase de transposition ;
- l'ensemble des puissances maximales crayons intégrées sur la hauteur active du coeur. Pour chaque assemblage, il n'est retenu qu'un seul crayon, celui qui porte la puissance intégrée la plus élevée. Cet ensemble, noté P CAL DH (x, y), est utilisé dans une phase dite de superposition qui permet de calculer le facteur d'élévation d'enthalpie du coeur notée FDH ;
- l'ensemble des puissances maximales locales. Pour chaque plan situé à la cote z et pour chaque assemblage, il n'est retenu qu'un seul crayon, celui qui porte la puissance locale maximale. Cet ensemble désigné P CAL (x, y, z) intervient dans la phase de superposition dans le calcul des facteurs de points chauds du coeurs FQ , FXY (z).

De son côté, le processus de reconstruction de la distribution de puissance mesurée fait intervenir principalement trois termes.

Le premier terme est le taux de réaction de fission dans le détecteur encore appelé activité.

Le deuxième terme fait intervenir le rapport entre la puissance moyenne d'un assemblage instrumenté et l'activité vue par un détecteur circulant dans le doigt de gant de cet assemblage. Comme déjà dit, ce n'est pas la puissance mais l'activité qui est mesurée ; il faut donc disposer d'une méthode permettant de passer de l'activité à la puissance, méthode dont les principes généraux sont donnés ci-après: la réaction d'absorption des neutrons par la matière sensible du détecteur se fait dans une bande d'énergie caractéristique de celle-ci. La connaissance de la quantité de neutrons appartenant à cette bande d'énergie par rapport au nombre total de neutrons est un problème de spectre neutronique. Le rapport puissance/activité est un paramètre issu de calculs de coeur effectués en 3D pour tous les assemblages. Ces calculs tiennent compte à la fois des effets de spectre locaux par l'intermédiaire du système de contre-réactions neutroniques et de la distribution de flux. Ces rapports sont actualisés en fonction de l'épuisement du combustible pour prendre en compte l'évolution des concentrations isotopiques au sein de l'assemblage. Dans ce cadre, une hypothèse est faite, consistant à écrire que les rapports entre valeurs calculées et valeurs reconstruites à partir des acquisitions expérimentales sont égaux pour les deux variables activité et puissance.

Le troisième terme est appelé terme de structure fine : il permet de passer de la puissance moyenne d'un assemblage à la puissance de n'importe quel crayon de cet assemblage. Pour ce faire, on suppose que, pour un assemblage donné, le rapport entre la puissance d'un crayon et la puissance moyenne de l'assemblage auquel appartient ce crayon est indépendant de l'origine de cette puissance, reconstruite ou calculée. En outre, une correction sera appliquée en fonction des écarts calcul/mesure observés autour de l'assemblage. Cette correction conduit à effectuer une interpolation linéaire à deux dimensions de type plan. L'interpolation est faite pour chaque assemblage et à chaque cote z.

De plus, pour calculer la puissance reconstruite dans tous les points non instrumentés du réacteur, il a été proposé un procédé permettant d'estimer des écarts calculs/mesures aux autres points du coeur que ceux ayant effectivement faits l'objet de mesures. C'est l'objet du procédé de propagation d'erreurs exposé aux paragraphes suivants.

Le processus de propagation d'erreurs, qui est explicité ci-après, débute par une opération consistant tout d'abord à calculer les écarts entre les valeurs effectivement mesurées et les valeurs calculées pour chaque assemblage instrumenté par le système d'instrumentation. Compte tenu de l'existence du calcul théorique et du processus de mesure préalablement exposé, on connaît, pour chacun des assemblages instrumentés, à la fois la valeur de l'activité mesurée par les détecteurs et la valeur correspondante calculée dans des conditions aussi proches que possible des conditions expérimentales. et ce, sur chacune des mailles axiales.

L'exécution du processus de propagation d'erreurs est, dans ses grandes lignes, le suivant ; son objectif est de déterminer, pour chaque plan de côte z, une surface Sz que l'on choisit de degré 3 en (x, y) pour les cartes complètes, capable de représenter la distribution des écarts entre les activités calculées et les activités mesurées sur tout le coeur. On notera que le choix de ce degré dépend de la densité de l'instrumentation disponible On désigne cette méthode par l'expression 'méthode de propagation des erreurs SFG (Surfaces Généralisées)".

Comme dit précédemment, en chaque position instrumentée, il est possible de calculer l'écart entre l'activité mesurée et l'activité théorique. On suppose ensuite que la distribution (x, y) des écarts à la cote z entre l'activité théorique et l'activité mesurée pour tous les assemblages peut être approchée par une surface Sz (x, y), s'exprimant analytiquement par un polynôme à deux dimensions de degré k, fixé par choix à la valeur 3 pour les cartes complètes. Les coefficients du polynôme caractérisant cette surface de réponse sont déterminés en minimisant une fonction d'erreurs F à plusieurs variables dont chacune est un des coefficients du polynôme. Le processus de minimisation est un processus classique des moindres carrés effectué à chaque cote axiale et rendant minimale la différence entre les écarts obtenus précédemment et les écarts calculés grâce au polynôme sur tous les assemblages instrumentés.

Dans la pratique, pour le système RIC, le processus d'extension utilise donc un procédé classique de minimisation des écarts sur les 60 positions instrumentées, et pour chaque cote axiale, entre l'écart calculs/mesures (C/M) initial et la valeur donnée par la surface de réponse. On dispose ainsi d'une fonction analytique en (x, y, z) qui permet de calculer des écarts calculs/mesures dans toutes les positions du coeur du réacteur. Ces écarts sont ensuite utilisés pour corriger en tous les points les valeurs théoriques. Après normalisation sur l'ensemble du coeur, on obtient une distribution de puissance reconstruite sur tout le volume du réacteur. In fine, tout se passe comme si on forçait le calcul à s'approcher au mieux des 60 points de mesure, la distribution de puissance reconstruite n'étant autre que la distribution de puissance issue de ce forçage.

En conséquence, le processus de propagation d'erreurs est associé à une composante d'incertitude particulière, notée $R_{U2}^N$, qui entre dans le calcul d'une incertitude globale intervenant dans un bilan de marges total à considérer sur la totalité du réacteur nucléaire considéré.

D'une manière générale, l'incertitude globale $E_U^N$ est définie par la relation suivante, correspondant à un remontage quadratique classique :

$$E_U^N = \sqrt{(\mu_U^N)^2 + (R_{U1}^N)^2 + (R_{U2}^N)^2 + (M_U^N)^2} \quad \text{(Equation 1)}$$

Les différentes composantes intervenant dans l'équation 1 sont les suivantes :

- la distribution de puissance locale 3D crayon dans chaque assemblage ne peut être déduite que du modèle théorique simulant les conditions expérimentales. L'incertitude de calcul $\mu_U^N$ sur cette structure fine est donc la première composante ;

- la réponse des détecteurs n'étant pas, comme on l'a précisé précédemment, du type puissance mais du type taux de réaction ou activité, il faut faire l'hypothèse que les écarts Calculs/Mesure de type activité peuvent être transposés au paramètre puissance. La composante d'incertitude $R_{U1}^N$ est associée à cette hypothèse de transposition ;

- les écarts Calculs/Mesure observés dans le domaine géométrique partiel couvert par les détecteurs sont propagés en tout point du coeur : la composante d'incertitude $R_{U2}^N$, dite composante d'incertitude de propagation d'erreurs, est associée à l'algorithme correspondant ;

- la dernière composante caractérise le détecteur, ou la combinaison de détecteurs, tant sous l'aspect physique du signal que sous celui de l'ensemble du processus d'acquisition. Ces différents aspects sont alors couverts par la composante d'incertitude $M_U^N$. Cette composante d'incertitude est dite composante d'incertitude intrinsèque au détecteur.

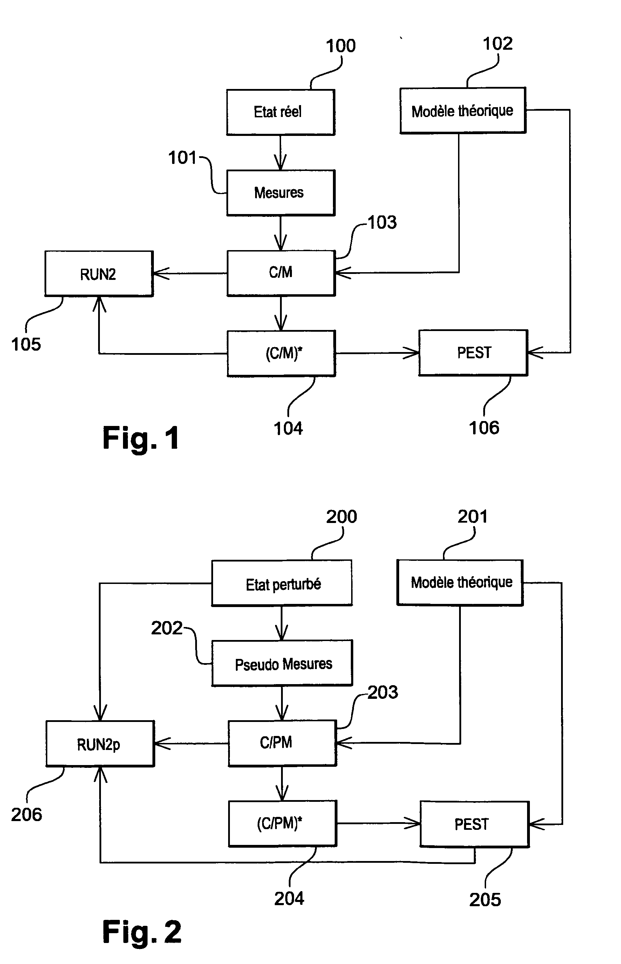

La méthode de calcul de la composante d'incertitude de propagation d'erreurs, telle que pratiquée dans l'état de la technique, est illustrée schématiquement en référence à la figure 1.

Sur cette figure, on illustre le fait que, pour un tel calcul, on part d'un état réel 100 qui, par définition, présente une distribution de puissance qui n'est pas connue, qui est à déterminer. Comme on l'a expliqué précédemment, on procède à un ensemble de mesures 101, soixante dans le cas du système RIC, sur l'ensemble du coeur du réacteur. Parallèlement, comme déjà également expliqué, on dispose d'un modèle théorique 102 de distribution de puissance établi en bureau d'étude, qui donne une cartographie complète des distributions de puissance au sein du coeur du réacteur.

On procède alors à une étape 103 au cours de laquelle on calcule les écarts, ou différences, notés C/M, entre les valeurs effectivement mesurées et les valeurs prévues par le calcul théorique, et ceci pour l'ensemble des points du réacteur pour lesquels on dispose d'une mesure.

A partir des écarts obtenus, on détermine, selon le processus de propagation d'erreurs précédemment mentionné, dans une étape 104, des écarts, notés (C/M)*, pour l'ensemble des points du réacteur nucléaire. On obtient ainsi un écart généralisé ou étendu, né du processus de propagation d'erreurs écart à appliquer à chaque valeur d'activité calculée, pour disposer d'une valeur d'activité estimée pour chaque point du réacteur nucléaire.

De son coté, la composante d'incertitude d'extension ($R_{U2}^N$) est directement calculée, dans une étape 105, à partir des résidus constitués, pour chaque point ayant fait l'objet d'une mesure expérimentale, par la différence entre l'écart (C/M)* étendu et l'écart C/M initial correspondant à ce point, par exemple en réalisant une moyenne quadratique de ces résidus.

Finalement, on détermine enfin, dans une étape 106, suite à l'étape de transposition activité/puissance précédemment évoquée, une puissance estimée $P_{est}$ en tout point du coeur du réacteur nucléaire, la valeur $P_{est}$ étant spécifique à chaque point du coeur du réacteur.

La solution de détermination de la composante d'incertitude de propagation d'erreurs ($R_{U2}^N$) qui vient d'être détaillée est applicable à tout coeur de réacteur nucléaire pour lesquels on peut effectivement réaliser des mesures, notamment par le système RIC. Mais une telle solution n'est pas applicable à des coeurs de réacteurs nucléaires qui vont être mis en place, pour lesquels aucune mesure de distributions de flux n'est encore réalisée, et également pour les coeurs de réacteurs nucléaires existants mais pour lesquels il est envisagé de mettre en place un nouveau système d'instrumentation.

Or de tels changements sont en train d'apparaître. En effet, les progrès informatiques des dernières années ont permis la généralisation des modèles 3D de calcul de coeur non seulement en bureau d'études mais aussi en ligne, ces modèles étant alors alimentés en temps réel avec les paramètres de fonctionnement de la tranche concernée. Les évolutions technologiques liées aux capteurs ont également permis de pouvoir disposer en permanence des signaux délivrés par des détecteurs placés à des positions fixes dans le coeur.

De nouveaux systèmes d'instrumentation ayant pour objectif une surveillance en ligne des marges de fonctionnement peuvent ainsi être définis. Cependant, les incertitudes correspondantes, associées à ces nouveaux systèmes, doivent évidemment faire l'objet d'une évaluation avant une installation industrielle, donc en l'absence de tout retour d'exploitation sur ces systèmes.

Dans ce contexte, on s'intéresse désormais à la détermination de la composante d'incertitude de propagation d'erreurs $R_{U2}^N$ pour des réacteurs nucléaires pour lesquels un nouveau système d'instrumentation est susceptible d'être utilisé. En effet, dans un tel cas de figure, un problème majeur se pose pour la détermination de la composante d'incertitude $R_{U2}^N$ : du fait de la nouveauté du système de mesure qui va être mis en place, il n'existe pas de mesures exploitables pour la détermination de cette composante d'incertitude.

Ainsi, on propose désormais un procédé permettant d'obtenir une composante d'incertitude de propagation d'erreurs pour tout réacteur nucléaire, même ceux destinés à être équipés d'un système d'instrumentation de mesure pour lequel il n'existe pas de retour d'exploitation avec le système considéré. A cet effet, on propose d'utiliser des données provenant d'un retour d'expérience acquis avec un système d'instrumentation de référence, par exemple le système RIC. Ce retour d'expérience disponible est alors utilisé pour appliquer à un modèle théorique de distribution de puissance des perturbations dont l'amplitude et la répartition dans l'espace sont telles que les écarts observés entre le modèle théorique perturbé et le modèle théorique directement issu du calcul sont représentatifs de ceux observés dans la réalité.

Ainsi, le problème posé par cette absence de retour d'exploitation avec un nouveau système de mesure peut être levé à partir du retour d'expérience considérable déjà acquis avec une instrumentation de référence. Ce retour d'expérience se traduisant essentiellement par une base d'écarts Calcul / Mesure 3D, on propose alors d'appliquer, dans l'invention, aux modèles théoriques des perturbations dont l'amplitude et la répartition seront telles que les écarts 3D, écarts notés, comme il le sera détaillé ultérieurement, Calcul / PseudoMesure, par rapport aux modèles initiaux sont représentatifs de ceux effectivement présents dans le coeur du réacteur nucléaire sur lequel est mis en oeuvre le procédé selon l'invention.

Ainsi, par exemple, pour des coeurs de réacteur nucléaire destinés à être équipés de systèmes de mesure de type collectrons, pour lesquels un retour d'expérience, ayant les caractéristiques requises pour l'application envisagée, peut être considéré comme insuffisant, on établira un modèle théorique perturbé à partir des mesures réalisées au moyen des systèmes RIC, qui présentent l'avantage d'offrir un retour d'expérience très important, permettant de définir avec précision les perturbations à appliquer à un modèle purement théorique.

La figure 2 illustre schématiquement un exemple de mise en oeuvre du procédé utilisé pour le calcul de la composante d'incertitude de propagation des erreurs. Afin de marquer la différence, entre le procédé de la figure 1 et ce nouveau procédé, dans la détermination de cette composante d'incertitude, cette dernière, lorsqu'elle est issue du nouveau procédé, est notée $R_{U2p}^N$.

Sur cette figure, on illustre le fait que, dans le nouveau procédé, on part d'un état dit perturbé 200 qui, correspond à un modèle de distribution de puissance théorique 201 auquel on a appliqué, en chaque point du coeur du réacteur nucléaire, au moins un paramètre physique de perturbation. Dans un mode particulier de mise en oeuvre de ce procédé, ce sont la totalité des points du coeur du réacteur nucléaire auxquels on applique une telle perturbation.

Par exemple, la perturbation physique à appliquer correspond à un ou plusieurs paramètres physiques parmi les suivants :

- désalignement d'au moins une grappe de contrôle par rapport aux autres grappes de contrôle du coeur de réacteur nucléaire considéré;
- imprécision sur la position des grappes de contrôle ; ces deux premiers paramètres physiques sont liés au fait que les grappes de contrôle, qui sont traditionnellement introduites par le haut du coeur du réacteur, et qui sont destinées à contrôler la puissance du coeur du réacteur - voire à stopper totalement celui-ci en cas d'incident important - sont mis en mouvement par des systèmes mécaniques complexes, la précision des déplacements, et a fortiori des déplacements relatifs, de ces grappes de contrôle
- imprécision sur la température d'entrée du modérateur ;
- inhomogénéité de la concentration en bore ;
- inhomogénéité de l'irradiation des assemblages de combustibles ;
- imprécision sur la puissance nominale du coeur de réacteur ;
- déséquilibre, azimutal ou radial, dans la répartition de la puissance nucléaire entre quadrants du coeur du réacteur

Avantageusement, les valeurs des perturbations appliquées viennent d'une base de données issues de données expérimentales obtenues sur des coeurs de réacteur nucléaire présentant des similitudes avec le coeur de réacteur sur lequel est mis en oeuvre le nouveau procédé. Les similitudes présentées concernent essentiellement l'organisation spatiale des assemblages combustibles au sein du coeur du réacteur, avec par exemple des similitudes dans les symétries de répartition observées. Par contre, il n'est pas indispensable que le coeur de réacteur nucléaire sur lequel on met en oeuvre le nouveau procédé présente le même type d'instrumentation de mesure. On peut ainsi utiliser des résultats expérimentaux collectés au moyen d'un système RIC pour déterminer les perturbations à appliquer aux points d'un coeur de réacteur nucléaire qui sera équipé d'un système d'instrumentation de mesure d'un type différent, par exemple de type aéroball ou collectrons.

Dans le nouveau procédé illustré, on procède, dans une étape 202, à la sélection d'un ensemble de valeurs d'activités ou de taux de réactions, désignées comme pseudo-mesures, dans les valeurs définissant l'état perturbé du coeur de réacteur nucléaire ; puis, dans une étape 203, on détermine, pour chaque point du réacteur nucléaire associé à une pseudo-mesure sélectionnée, un écart initial, noté (C/PM) entre le taux de réaction théorique et la pseudo-mesure correspondante..

On réalise ensuite, dans une étape 204, à partir des écarts initiaux déterminés, une opération de processus de propagation d'erreurs à l'ensemble du coeur du réacteur pour associer à tout point du coeur de réacteur nucléaire une valeur de correction étendue, notée (C/PM)*.

On détermine ensuite, dans une étape 205, pour chaque point du réacteur nucléaire, une puissance estimée, la valeur de correction étendue intervenant comme paramètre dans ladite détermination de puissance estimée.

Selon le nouveau procédé, on peut alors, dans une étape 206 calculer une pluralité de résidus en réalisant la différence, pour au moins une pluralité de points du coeur de réacteur nucléaire, entre la puissance estimée et la représentation perturbée de cette puissance pour chaque point considéré ; la composante d'incertitude de propagation d'erreurs $R_{U2p}^{N}$ est alors établie à partir des résidus évalués, par exemple en réalisant leur moyenne quadratique. Avantageusement, on calcule les résidus pour l'ensemble des points du réacteur nucléaire.

Ainsi, en résumé, on peut considérer que le nouveau procédé de détermination d'une composante d'incertitude, dite composante d'incertitude de propagation d'erreurs, intervenant dans un calcul d'une incertitude globale associée à une distribution de puissance d'un coeur de réacteur nucléaire, est caractérisé par les différentes étapes consistant à :

- établir une cartographie tridimensionnelle d'une distribution de puissance théorique du coeur de réacteur nucléaire considéré ; avantageusement, on dispose de cartographies tridimensionnelles de distribution de puissance théorique pour différentes configurations du coeur de réacteur nucléaire.
- établir une représentation perturbée du coeur de réacteur nucléaire, la représentation perturbée consistant à appliquer au moins un paramètre physique de perturbation à la distribution de puissance théorique pour au moins une pluralité de points du coeur de réacteur nucléaire ;
- sélectionner un ensemble de valeurs d'activités ou de taux de réaction, désignés comme pseudo-mesures, dans la représentation perturbée du coeur de réacteur nucléaire ;
- déterminer, pour chaque point du réacteur nucléaire associé à une pseudo-mesure, un écart initial entre une activité théorique, issue de la cartographie tridimensionnelle théorique du coeur de réacteur nucléaire, et la pseudo -mesure, déduite du modèle perturbé, associée au point considéré ;
- réaliser, à partir des écarts initiaux déterminés, une opération de processus de propagation d'erreurs à l'ensemble du coeur du réacteur pour associer à tout point du coeur de réacteur nucléaire une valeur de correction étendue ;
- déterminer, pour chaque point du réacteur nucléaire, une puissance estimée, la valeur de correction étendue intervenant comme paramètre dans ladite détermination de puissance estimée ;
- calculer une pluralité de résidus en réalisant la différence, pour cette même pluralité de points du coeur de réacteur nucléaire, entre la puissance estimée et la représentation perturbée de cette puissance pour chaque point considéré ;
- déterminer la composante d'incertitude de propagation d'erreurs à partir des résidus ainsi évalués.

Par l'expression "point du coeur de réacteur nucléaire", on désigne un volume du réacteur nucléaire pour lequel on cherche à attribuer, dans le cadre de l'élaboration d'une distribution de puissance 3D, une valeur de puissance, ou une valeur de paramètre physique corrélé à la puissance. Chaque point du coeur de réacteur nucléaire est ainsi associé à une unique telle valeur.

Avantageusement, le paramètre physique de perturbation appliqué adopte une valeur issue de mesures préalablement réalisées pour des coeurs de réacteur nucléaire de conception comparable ; par l'expression "coeur de réacteur nucléaire de conception comparable", on désigne les coeurs de réacteurs nucléaires dont l'architecture, notamment en terme de disposition générale des assemblages combustibles, présente des éléments de ressemblance significatifs avec celle du coeur de réacteur nucléaire sur lequel est appliqué le procédé selon l'invention. Ainsi, la méthode peut s'appliquer indifféremment à des coeurs 2-Boucles (121 assemblages), 3-Boucles (157 assemblages), 4-Boucles (193 assemblages), 4-Boucles N4 (205 assemblages) et EPR (241 assemblages). Le rapport entre le nombre d'assemblages instrumentés et le nombre total d'assemblages pour les coeurs de réacteurs autre que ceux de l'EPR est voisin de 30% (30/121=0.25, 50/157=0.32, 58/193=0.30 et 60/205=0.29). Dans le cas EPR ce rapport est 40/241=0.17. Le procédé décrit est notamment utilisé, à instrumentation égale, pour quantifier l'impact sur le poste d'extension de la diminution significative de ce rapport. Cette quantification a ainsi été réalisée pour le passage de 58 canaux instrumentés à 42 (dans le cadre d'un schéma RIC complémentaire résultant de l'introduction de 16 cannes collectrons dans des tubes guides qui étaient normalement scrutés par des sondes mobiles : 42/193=0.22 et 42/58=0.72), et de 58 à 16 (dans le cadre du schéma collectrons précédemment évoqué).

Ainsi, l'équation 1 qui définit le remontage final de l'incertitude de reconstruction $E_U^N$ résulte d'un processus s'appliquant au triplet (configuration réelle du coeur, configuration théorique simulée, écarts C/M) est alors remplacée par une équation 2, définissant le même remontage à partir d'un nouveau triplet (configuration théorique perturbée, configuration théorique initiale, écarts C/PM).

L'équation 1 devient alors :

$$E_{Up}^N = \sqrt{(\mu_U^N)^2 + (R_{U1}^N)^2 + (R_{U2p}^N)^2 + (M_U^N)^2} \qquad \text{Equation 2}$$

L'indice p de cette relation a pour signification prime : il s'agit essentiellement de faire une nette distinction au niveau des triplets qui sont en amont du remontage final.

Le terme $\left(E_{Up}^N\right)$ de l'équation 2 a la même signification que l'incertitude $\left(E_U^N\right)$ de la relation 1. Il se compose donc des mêmes termes. Les deux postes qui sont affectés au premier ordre par un changement de système d'instrumentation sont évidemment la composante $\left(M_U^N\right)$ caractérisant le détecteur utilisé et la composante $\left(R_{U2}^N\right)$ couvrant le passage des données expérimentales sur un domaine partiel vers la puissance maximale locale 3D en tout point du coeur.

La composante $\left(R_{U2}^N\right)$ sera toujours concerné par un changement de système d'instrumentation. Son évaluation classique repose sur une comparaison entre l'écart (C/M)* étendu, via l'algorithme de propagation d'erreurs retenu, en un point scruté par l'instrumentation disponible et l'écart C/M initial en un point effectivement instrumenté. Cette comparaison implique donc l'existence d'une référence expérimentale, cette référence étant partielle dans tous les cas.

Pour pallier ce caractère partiel le nouveau procédé permet de faire cette comparaison sur un ensemble complet. La composante $R_{U2p}^N$ est maintenant évaluée par comparaison des distributions de puissances locales 3D reconstruites en tout point du coeur et des distributions équivalentes de référence déterminées dans le cadre du nouveau procédé.

A titre complémentaire, on peut préciser que pour que les distributions d'écarts C/PM soient représentatives des écarts C/M effectivement observées lors du suivi d'exploitation des réacteurs en fonctionnement il faut que les types et l'amplitude des perturbations appliquées aux modèles génériques aient été correctement définis.

Cette définition passe par la construction d'une base réelle de référence couvrant le maximum de configurations sous le double aspect du type des assemblages chargés dans les réacteurs en exploitation et du mode de gestion du temps de séjour en réacteur de ces assemblages.

La définition des ensembles de Pseudo Mesures est un des objectifs assignés aux modèles de référence. Il est alors fondamental que ces ensembles soient les plus proches possibles de ceux effectivement observés sur site pour chacun des systèmes d'instrumentation analysés.

Il faut donc tenir compte en même temps de toutes les caractéristiques de ces systèmes et de l'impact de ces caractéristiques par rapport à la réponse du système RIC de référence. Ces impacts sont liés :

a) Au changement de la densité radiale des canaux instrumentés ($58 \rightarrow 42$ canaux pour les schémas RIC complémentaires d'un coeur 4-Boucles classique et $58 \rightarrow 16$ pour les schémas collectrons des coeurs de ce type) ;
b) Au type de détecteur (Uranium 235 dans le cas du RIC et Rhodium 103 dans le cas des collectrons) ;
c) Au changement de la répartition axiale des points de mesure dans le cas des détecteurs de type collectron (65 mailles continues $\rightarrow$ 8 mailles discontinues), d'où la nécessité d'une conversion de maillage ;

d) Aux caractéristiques de l'incertitude expérimentale $M_U^N$ .

o Dans le cas des signaux de type RIC cette incertitude ne comporte qu'une part locale 3D indépendante du temps.

o Dans le cas des collectrons il est important de tenir compte des composantes 3D et 2D (par canne) de cette incertitude et de sa variabilité en cours d'usure.

De façon d'une part à minimiser le nombre de configurations perturbées à construire et d'autre part à consolider encore le lien avec la base expérimentale réelle il a été choisi, pour les premières applications pratiques de la mise en oeuvre du nouveau procédé, d'utiliser une approche différentielle par rapport à l'instrumentation de référence.

L'instrumentation interne de type CFM (Chambre à Fission Mobile), utilisée dans le système RIC, est en effet considérée comme une instrumentation de référence en raison :

1. De sa résolution axiale (1 acquisition / mm) ;
2. De son auto calibrage (plusieurs détecteurs peuvent scruter le même canal) ;
3. De sa précision indépendante du temps (usure négligeable car les détecteurs ne sont irradiés qu'environ 1 heure chaque mois) ;
4. D'une couverture quasi complète par quadrant dans les cas des coeurs 3Boucles & 4Boucles actuels ;
5. D'une incertitude finale $\left( E_U^N \right)$ bien maîtrisée et reposant sur une base expérimentale considérable.

Le remontage est alors effectué suivant la relation ci-après :

$$\boxed{(E_U^N)_{SchX} = (E_U^N)_{REF} + (\Delta E_{Up}^N)_{SchX}^{REF}} \qquad \text{Equation 2a}$$

Le terme SchX désigne l'expression "Schéma X", s'appliquant à tout système d'instrumentation différent du système d'instrumentation de référence (désigné par le terme REF). Le terme correctif $(\Delta E_{U2p}^N)_{SchX}^{REF}$ de l'équation 2a définissant ce remontage différentiel peut ainsi être appliqué avec :

$$(E_{Up}^N)_{REF} = \sqrt{(\mu_U^N)^2 + (R_{U1}^N)_{REF}^2 + (R_{U2p}^N)_{REF}^2 + (M_U^N)_{REF}^2} \qquad \text{(équation 3)}$$

Et

$$(E_{Up}^N)_{SchX} = \sqrt{(\mu_U^N)^2 + (R_{U1}^N)_{SchX}^2 + (R_{U2p}^N)_{SchX}^2 + (M_U^N)_{SchX}^2} \qquad \text{(équation 4)}$$

Ce terme correctif contient non seulement la différence $(\Delta R_{U2p}^N)_{SchX}^{REF}$, mais également celles qui résultent d'un changement de détecteur ou d'une combinaison de détecteurs, d'où par exemple les variations $(\Delta R_{U1}^N)_{SchX}^{REF}$, $(\Delta M_U^N)_{SchX}^{REF}$ et/ou $(\Delta X_U^N)_{SchX}^{REF}$, X désignant alors un poste d'incertitude n'existant que pour la configuration *SchX*.

Sous l'aspect des distributions de puissance reconstruites la composante $R_{U2p}^N$ reste l'indicateur caractéristique d'un système d'instrumentation quelconque. La différence $(\Delta R_{U2p}^N)_{SchX}^{REF}$ est donc le paramètre déterminant lors du dimensionnement de l'incertitude $E_U^N$ et elle a été analysée pour toutes les configurations de la base de perturbations.

La variabilité observée sur la différence $(\Delta R_{U2p}^N)_{SchX}^{REF}$ est en grande partie une conséquence du poste $M_U^N$ via le processus de bruitage 3D des Pseudo Mesures. Cette différence est, dans la pratique, définie en amont du remontage final par l'utilisation d'une approche statistique.

ARRIERE-PLAN TECHNOLOGIQUE DE L'INVENTION

Comme on l'a mentionné précédemment, dans plusieurs coeurs de réacteurs, on a procédé au remplacement de capteurs appartenant au système d'instrumentation de type RIC par des capteurs de type collectrons. Cette réduction, qui fait typiquement passer le nombre de capteurs du système RIC de 58 à 42, le nombre de collectrons présents de manière fixe dans le coeur de réacteur étant alors de 16. Ainsi, 16 tubes guide qui étaient normalement scrutés par des sondes mobiles du système RIC ne sont plus exploitables dans l'établissement d'une cartographie déduite des seuls capteurs RIC. Une telle configuration se traduit par une réduction significative du nombre de canaux instrumentés scrutés par des capteurs du système de référence RIC, ces derniers permettant de réaliser les cartographies qui sont normalement requises pour vérifier la conformité du coeur du réacteur lors des essais de démarrage et pour assurer la surveillance périodique des facteurs de points chauds tout au long du cycle d'irradiation.

Par ailleurs, dans l'invention, on s'intéresse tout particulièrement aux détecteurs de type collectrons. Les collectrons sont des détecteurs situés à élévation fixe dans le coeur du réacteur nucléaire, et qui sont capables de délivrer une information en continu. Les collectrons les plus répandus sont du type collectrons au rhodium. Les mesures réalisées sont traitées directement en ligne par un calculateur intégré ou par un calculateur de tranche. Le temps de réponse du système dépend essentiellement des performances de ce calculateur qui déterminent le temps de calcul. Les principes de fonctionnement des collectrons sont désormais connus et disponibles dans différentes documentations.

Un problème important à résoudre avec l'utilisation des collectrons réside dans le fait que la composante d'incertitude $M_U^N$ augmente de façon significative en fonction du temps passé en réacteur et de l'usure de l'émetteur Rhodium associé au collectron considéré.

De façon à tenir compte de cette usure de l'émetteur Rhodium une loi de correction a été établie après une expérimentation de sept années en réacteur de puissance : l'application de cette loi au signal délivré par un collectron au bout d'une durée t de fonctionnement permet de retrouver le signal qu'aurait émis ce collectron en début de vie. Cette loi, dite loi de sensibilité, s'écrit :

$$S(t) = S(0) \times \left( 1 - \frac{Q(t)}{Q_\infty} \right)^a \quad \text{Relation 0}$$

Avec :

- $Q(t) = \int_0^t I(t') \, dt'$ et où I(t) est le courant brut fourni par le détecteur à un instant t. Dans la pratique, les signaux initiaux fournis par le détecteur ont du être conditionnés par des opérations de déconvolutions (pour reprendre un retard lié aux caractéristiques des réactions nucléaires en jeu) et de filtrage (pour atténuer le bruit induit par la déconvolution). Le terme brut doit ici être compris dans le sens 'avant correction d'usure'.
- $S(0)$ est la sensibilité initiale du détecteur et $Q_\infty$ est sa charge totale disponible.
- L'exposant $a$ est un coefficient déterminé de manière empirique à l'issue de l'expérimentation.

Si l'on désigne par $I(t)$ le courant délivré par un collectron à un moment donné de son irradiation et par $I(0)$ le signal qu'aurait eu ce même collectron non épuisé, la correction de sensibilité s'effectue suivant la relation suivante ;

$$I(0) = \frac{I(t)}{S(t)} \quad \text{Relation 0bis}$$

Une importante conséquence de la relation 0 est que, faisant intervenir la charge intégrée, l'application de cette relation se traduit par un cumul des incertitudes sur le courant débité, d'où une augmentation de l'erreur totale en fonction du temps d'irradiation

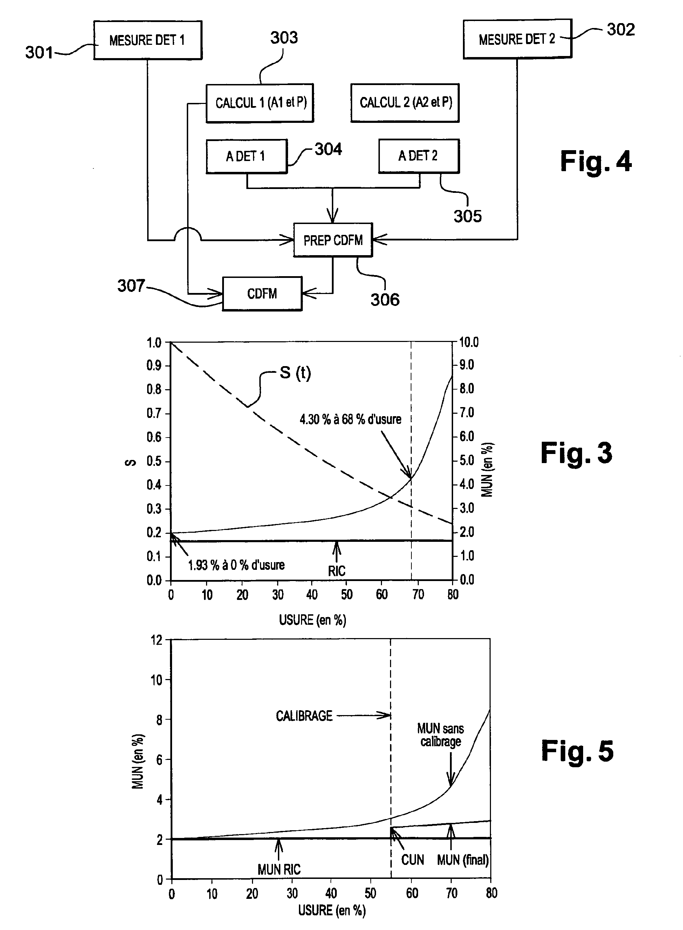

C'est ainsi que cette incertitude, ou erreur, estimée à 2 % en début de vie, atteint 4.3 % à 68 % d'usure et est supérieure à 8 % en fin de vie des collectrons pour 80 % d'usure, comme représenté à la figure 3, qui montre la loi de sensibilité et la composante d'incertitude $M_U^N$ pour un collectron rhodium en fonction de l'usure du détecteur considéré, ainsi que, pour comparaison, la composante d'incertitude $M_U^N$ pour un détecteur de type RIC..

En comparaison, on peut rappeler que la composante $M_U^N$ du système RIC est inférieure à 2 % et ne subit pas d'augmentation en cours d'irradiation.

DESCRIPTION GENERALE DE L'INVENTION

La présente invention apporte une réponse aux problèmes qui viennent d'être évoqués. Dans l'invention, on propose, pour compenser, via une utilisation optimale conjointe des mesures issues d'un autre système, une diminution de la densité spatiale des mesures de référence. La méthode utilisée pour assurer cette compensation met en oeuvre un moyen basé sur le principe des cartographies mixtes, qui va être développé ci-dessous. Dans le procédé selon l'invention, on met à profit la présence simultanée d'une part des capteurs du système d'instrumentation mobile de référence (système RIC) et d'autre part des acquisitions délivrées en permanence par les capteurs du système d'instrumentation fixe (collectrons).

Une application immédiate de la mise en oeuvre du procédé selon l'invention réside dans la mise en oeuvre d'un procédé de calibrage des capteurs de type collectrons, en faisant intervenir des informations provenant de l'instrumentation RIC complémentaire. Ainsi, la caractéristique des collectrons, selon laquelle la composante $M_U^N$ atteint relativement rapidement des valeurs importantes, pénalisant par exemple fortement tout système de surveillance utilisant les acquisitions continues des collectrons, est solutionnée.

La présente invention se rapporte donc essentiellement à un procédé d'établissement d'une cartographie représentative d'une distribution de puissance au sein d'un coeur de réacteur nucléaire, ladite cartographie étant établie au moyen de détecteurs placés au moins provisoirement dans le coeur du réacteur, caractérisé en ce qu'il comporte les différentes étapes consistant à :

- équiper, au moins provisoirement, un premier ensemble d'assemblages de combustibles du coeur du réacteur nucléaire au moyen de détecteurs d'un premier système d'instrumentation, dit système d'instrumentation de référence ;
- équiper, au moins provisoirement, un deuxième ensemble d'assemblages de combustibles du coeur du réacteur nucléaire au moyen de détecteurs d'un deuxième système d'instrumentation ;
- réaliser un premier ensemble de mesures partiel d'activités au moyen des détecteurs du système de référence ;
- réaliser un deuxième ensemble de mesures partiel d'activités au moyen des détecteurs du deuxième système d'instrumentation ;
- convertir les mesures d'activités du deuxième ensemble de mesures en mesure d'activités associées au système d'instrumentation de référence, pour obtenir un ensemble de mesures converties ;
- établir, à partir du premier ensemble de mesures partiel d'activités, de l'ensemble de mesures converties, d'une distribution théorique complète des activités théoriques associées au système d'instrumentation de référence, et d'une distribution théorique complète des activités théoriques associées au deuxième système d'instrumentation, pour tout point instrumenté du coeur du réacteur nucléaire, un ensemble final de données expérimentales d'activités du coeur du réacteur, ledit ensemble de données ne comportant que des valeurs relatives aux activités associées au système d'instrumentation de référence ;
- établir, à partir de l'ensemble final de données expérimentales et de données théoriques simulant un état du coeur du réacteur au moment de la réalisation du premier ensemble de mesures et du deuxième ensemble de mesures, la cartographie représentative d'une distribution de puissance au sein d'un coeur de réacteur nucléaire.

Outre les caractéristiques principales qui viennent d'être mentionnées, le procédé selon l'invention peut présenter une ou plusieurs caractéristiques complémentaires parmi les suivantes :

- l'étape de conversion des mesures d'activités du deuxième ensemble de mesures en mesure d'activités associées au système d'instrumentation de référence obéit à la relation suivante :

$$A_{1 \leftarrow 2}^{CONV} = g \cdot \left(\frac{A_1}{A_2}\right)^{CAL} \cdot \left(A_2^{MES}\right)_{relatif}$$

où :

- $A_2^{MES}$ est la distribution des activités mesurées par les détecteurs du deuxième système d'instrumentation, dont les éléments sont liés par une normalisation d'ensemble ;
- $A_1^{CAL}$ et $A_2^{CAL}$ sont les distributions des activités équivalentes calculées pour les détecteurs du premier système d'instrumentation et du deuxième système d'instrumentation respectivement ;
- $A_{1 \leftarrow 2}^{CONV}$ est la conversion d'une activité mesurée par un détecteur du deuxième système d'instrumentation en une activité qui serait détectée par un détecteur du premier système d'instrumentation ;
- g est un coefficient rendant compte des différences de normalisation entre les deux distributions.
- l'étape de conversion des mesures d'activités du deuxième ensemble de mesures en mesure d'activités associées au système d'instrumentation de référence est suivie par une opération de normalisation obéissant à la relation suivante :

$$A_1^{mixte} = \frac{\sum_1^{N1} (A_1^{MES})_{relatif} + \sum_1^{N2} A_{1 \leftarrow 2}^{CONV}}{N1 + N2}$$

où :
- $N1$ et $N2$ sont les nombres d'acquisitions pour les détecteurs du premier système d'instrumentation et du deuxième système d'instrumentation respectivement ;
- $(A_1^{MES})_{relatif}$ est la distribution des activités mesurées par les détecteurs du premier système d'instrumentation, dont les éléments sont liés par une normalisation d'ensemble ;
- $A_{1 \leftarrow 2}^{CONV}$ est la conversion d'une activité mesurée par un détecteur du deuxième système d'instrumentation en une activité qui serait détectée par un détecteur du premier système d'instrumentation.
- le système d'instrumentation de référence est un système à détecteurs mobiles.
- le deuxième système d'instrumentation de référence est un système à détecteurs fixes.
- le système d'instrumentation de référence est un système de type RIC.
- le deuxième système d'instrumentation fait intervenir des détecteurs de type collectrons.

La présente invention se rapporte également à un procédé de correction d'une composante d'incertitude intrinsèque associée à un détecteur de type collectron disposé dans un coeur de centrale nucléaire, caractérisé en ce qu'il comporte l'étape consistant à réaliser une opération de calibrage du collectron considéré, l'opération de calibrage étant réalisée lorsque le détecteur de type collectron a atteint un niveau d'usure donné, l'opération de calibrage consistant à réaliser un calibrage tridimensionnel à partir d'une cartographie déterminée, avec un système d'instrumentation de référence faisant intervenir des détecteurs de type détecteurs RIC, par le procédé décrit précédemment.

Ce calibrage tridimensionnel repose sur une application particulière de la méthodologie des cartographies mixtes, cette application permettant de définir des facteurs 3D venant corriger les valeurs de la loi de sensibilité aux positions (XYZ) scrutées par les collectrons.

Outre les caractéristiques principales qui viennent d'être mentionnées, le procédé de correction peut présenter une ou plusieurs caractéristiques complémentaires parmi les suivantes :

- l'opération de calibrage consistant réaliser un calibrage tridimensionnel à partir de cartes de flux déterminées pour des détecteurs de type détecteurs RIC donne, au niveau d'usure donné auquel l'opération de calibrage est réalisée, pour valeur à la composante d'incertitude intrinsèque du détecteur de type collectron considéré, la valeur de la composante d'incertitude intrinsèque déterminée pour un détecteur neuf, augmentée d'une valeur dite d'incertitude de calibrage ;

- le niveau d'usure donné pour lequel on effectue l'opération de calibrage du collectron considéré est compris entre 50% et 60% d'usure dudit collectron.

L'invention et ses différentes applications seront mieux comprises à la lecture de la description qui suit et à l'examen des figures qui l'accompagnent.

BREVE DESCRIPTION DES FIGURES

Celles-ci ne sont présentées qu'à titre indicatif et nullement limitatif de l'invention. Les figures montrent :

- à la figure 1, déjà décrite, une représentation schématique des différentes étapes d'un procédé de l'état de la technique illustrant le processus d'extension des écarts C/M observés dans un coeur de réacteur nucléaire ;
- à la figure 2, également déjà décrite, une représentation schématique des différentes étapes d'un exemple de mise en oeuvre d'un nouveau procédé de propagation des erreurs C/M et ainsi d'extension en tout point du coeur des écarts C/M observés sur un domaine partiel dans un coeur de réacteur nucléaire ;

- à la figure 3, également déjà décrite, une représentation graphique de la loi de sensibilité et de l'évolution de la composante d'incertitude $M_U^N$ pour un collectron rhodium en fonction de l'usure du détecteur considéré, avant la mise en oeuvre du procédé selon l'invention ;

- à la figure 4, une représentation schématique des différentes étapes d'un exemple de mise en oeuvre du procédé selon l'invention ;

- à la figure 5, une représentation graphique de la composante d'incertitude $M_U^N$ pour un collectron rhodium en fonction de l'usure du détecteur considéré, après la mise en oeuvre du procédé selon l'invention.

DESCRIPTION DETAILLEE DES FORMES DE REALISATION PREFEREES DE L'INVENTION

Le procédé selon l'invention fait appel aux algorithmes développés dans le cadre des cartes de flux mixtes, dans lequel le procédé selon l'invention trouve son fondement. Une présentation succincte des principes des cartes de flux mixte est rappelée ici.

Il est tout d'abord présenté ci-dessous les algorithmes de traitement des cartes de flux mixtes.

Pour des raisons mécaniques les détecteurs INCORE fixes ne peuvent être installés que dans des positions normalement scrutées par les détecteurs INCORE mobiles du système RIC. Il en résulte une réduction de la densité d'information disponible via ce système de référence. De façon à compenser cette réduction et donc éviter d'éventuelles pénalités il est donc apparu intéressant d'utiliser au mieux toutes les données expérimentales disponibles au même moment. La combinaison des distributions expérimentales déduites des deux systèmes au cours d'une campagne de mesures de type EP11 permet de retrouver une densité maximale.

La méthode de combinaison des cartes de flux mixtes est brièvement décrite ci-dessous :

Soient deux distributions expérimentales de natures différentes {A1} et {A2} et comportant également un nombre différent d'éléments (N1,N2). Chacun de ces ensembles étant normalisé à l'unité les éléments A1 et A2 sont liés par les relations ci-dessous :

$$\sum_1^{N1} A1 = N1 \quad et \quad \sum_1^{N2} A2 = N2 \quad \text{Relation 1}$$

Ces normalisations initiales séparées sont incontournables car les valeurs déduites des deux systèmes d'acquisition sont exprimées dans des unités différentes et de plus n'ont pas forcément la même nature physique.

L'objectif est d'obtenir un nouvel ensemble également normalisé à l'unité et comportant N1+N2 éléments. Il faut pour cela tout d'abord rendre cohérents les deux ensembles sous l'aspect de leur nature physique.

Ces deux distributions pouvant être déterminées à partir de modèles théoriques la méthode de combinaison repose alors sur l'hypothèse d'invariance du rapport MES / CAL :

$$\boxed{\frac{A_1^{MES}}{A_1^{CAL}} \approx \frac{A_2^{MES}}{A_2^{CAL}}} \qquad \text{Relation 2}$$

Le symbole $\approx$ apparaissant dans la relation 2 est plutôt un symbole de proportionnalité et il implique que l'équivalence correspondante ne peut pas être appliquée directement pour convertir les données de type 2 en données de type 1 : il faut en effet tenir compte de ce que les normalisations initiales portent sur des ensembles différents sous le double aspect de la répartition spatiale et du nombre d'éléments. La conversion d'un élément de type 2 doit se faire à partir de valeurs brutes :

$$(A_{1 \leftarrow 2}^{CONV})_{brut} = (\frac{A_1}{A_2})^{CAL} . (A_2^{MES})_{brut} \qquad \text{Relation 3}$$

Le label brut a ici la signification "à normalisation identique". Le rapport de conversion A1/A2 de la relation 2 peut néanmoins être utilisé tel quel car ses deux composantes ont été obtenues sur le même ensemble : la totalité du coeur actif.

L'objectif recherché est alors d'approcher au plus près la valeur brute qui aurait été obtenue dans le cas d'une instrumentation homogène. Cet objectif s'écrit :

$$(A_{1 \leftarrow 2}^{CONV})_{brut} = (A_1^{MES})_{brut} \qquad \text{Relation 4}$$

Les valeurs indicées brutes n'étant pas généralement pas disponibles dans une unité commune toute comparaison implique une normalisation et donc la définition de valeurs relatives :

$$A_{relatif}^{ensemble\,N} = \frac{A_{brut}}{\overline{A}_{brut}^{ensemble\,N}} \qquad \text{Relation 5}$$

La relation 3 s'applique aux valeurs brutes. L'utilisation des valeurs relatives, les seules vraiment disponibles, impose d'adjoindre à cette relation un coefficient *g* rendant compte des différences de normalisation :

$$A_{1 \leftarrow 2}^{CONV} = g \cdot (\frac{A_1}{A_2})^{CAL} \cdot (A_2^{MES})_{relatif} \qquad \text{Relation 6}$$

le problème étant alors de déterminer le facteur *g*.

En raison de la non disponibilité simultanée des valeurs brutes réelles des informations de types 1 et 2 l'évaluation du facteur *g* sera faite en considérant que les valeurs déduites des distributions théoriques complètes ont le label *brut* car il s'agit de valeurs provenant de normalisations identiques. Dans ces conditions les relations 3 et 4 peuvent être écrites de la façon suivante :

$$(A_{1 \leftarrow 2}^{CONV})_{brut} = (\frac{A_1}{A_2})^{CAL} \cdot (A_2^{CAL})_{complet} \qquad \text{Relation 7}$$

$$(A_{1 \leftarrow 2}^{CONV})_{brut} = (A_1^{CAL})_{complet} \qquad \text{Relation 8}$$

Les valeurs effectivement disponibles étant des valeurs relatives définies par la relation 5 on a alors la relation 9 suivante:

$$(A_1^{CAL})_{relatif\,N1} \cdot (\overline{A_1}^{CAL})_{N1/complet} = (\frac{A_1}{A_2})^{CAL} \cdot (A_2^{CAL})_{relatif\,N2} \cdot (\overline{A_2}^{CAL})_{N2/complet}$$

L'équivalence des relations 6 et 9 fournit la valeur du coefficient *g* :

$$g = \frac{(\overline{A_2}^{CAL})_{N2/complet}}{(\overline{A_1}^{CAL})_{N1/complet}} \qquad \text{Relation 10}$$

La définition du nouvel ensemble repose alors sur la normalisation des activités initiales $(A_1^{MES})_{relatif}$ et des activités converties $A_{1 \leftarrow 2}^{CONV}$ via la relation 6. Cette normalisation finale s'écrit :

$$A_1^{mixte} = \frac{\sum_1^{N1}(A_1^{MES})_{relatif} + \sum_1^{N2} A_{1 \leftarrow 2}^{CONV}}{N1 + N2} \qquad \text{Relation 11}$$

Cet ensemble 'mixte' est donc complètement défini et il possède toutes les caractéristiques requises (cohérence et norme).

La relation 6 fait apparaître le rapport $(A_1/A_2)$ permettant la conversion du type 2 au type 1 et le coefficient *g* rendant compte des différences de normalisation.

L'incertitude sur le rapport $A_1/A_2$ peut être établie de manière similaire à celle déjà mise en oeuvre pour le rapport $\overline{P}/A$, évoquant la corrélation existant entre l'activité dans le canal instrumenté et la puissance moyenne de l'assemblage contenant ce canal ; on rappelle que l'incertitude associée à l'utilisation de ce rapport est notée $R_{U1}^{N}$.

Désignons par $\sigma_{A1}$ et $\sigma_{A2}$ les écarts types caractérisant les incertitudes sur les deux termes de ce rapport. On peut écrire :

$$\sigma_{A1/A2}^{2} = \sigma_{A1}^{2} + \sigma_{A2}^{2} - 2.r.\sigma_{A1}.\sigma_{A2}$$

avec r caractérisant la corrélation entre les termes A1 et A2.

Le retour d'expérience du réacteur connu comme le réacteur CATTENOM 1 montre que les écarts C/M sont sensiblement les mêmes dans les ensembles A1 (U5) et A2 (Rh). Il en résulte $\sigma_{A1} = \sigma_{A2} = \sigma_A$, ce qui définit complètement la composante conversion du poste $T_U^N$ :

$$(\sigma(T_U^N))_{conversion}^{2} = \sigma_{A1/A2}^{2} = 2.(1-r).\sigma_A^{2} \qquad \text{Relation 12}$$

Le coefficient de corrélation r peut alors être obtenu en traçant A2 en fonction de A1 pour des positions symétriques. Dans le cas du poste d'incertitude $R_{U1}^{N}$ le coefficient de corrélation a été trouvé supérieur à 0.95 dans plus de 95 % des cas. C'est également le cas pour les couples (A1 ,A2) : la valeur numérique à affecter au poste $(\sigma(T_U^N))_{conversion}$ sera donc la même que celle du poste $\sigma(R_{U1}^{N})$.

L'incertitude associée au coefficient g peut quant à elle être évaluée en utilisant les cartes complètes existantes établies à partir des systèmes RIC. La comparaison des distributions de puissance reconstruites par cette méthode (42+16) avec les distributions classiques reconstruites avec le schéma 58 permet de quantifier le poste $(T_U^N)_{normalisation}$.

Les deux effets, conversion de type et normalisation, étant indépendants on a alors :

$$\boxed{(T_U^N)^{2} = (T_U^N)_{conversion}^{2} + (T_U^N)_{normalisation}^{2}} \qquad \text{Relation 13}$$

Il est à présent appliqué les algorithmes de traitement des cartes de flux mixtes au calibrage des collectrons

Cette méthode est en fait une extension des algorithmes mis en place pour les cartes mixtes (RIC 42 canaux + COL 16 cannes). Le point de départ est le même : conversion des signaux collectrons en signaux Pseudo RIC. Mais ici les signaux collectrons utilisés en amont du processus sont des signaux non corrigés de la loi d'usure ; ils sont seulement déconvolués et filtrés. La première relation de la méthode est alors :

$$A_{PRIC}^{BRUT} = g.\left[\frac{A_{RIC}}{A_{COL}}\right]^{CAL}.A_{COL}^{BRUT} \qquad \text{Relation 14}$$

A l'issue du traitement classique d'une carte de flux RIC complémentaire (42 canaux) on dispose des activités RIC reconstruites en tous points et notamment aux positions occupées par les collectrons. Désignons par $A_{RIC}^{EST}$ cette distribution. Un ensemble de facteurs correctifs 3D peut maintenant être défini :

$$FCOR = \frac{A_{PRIC}^{BRUT}}{A_{RIC}^{EST}} \qquad \text{Relation 15}$$

Bien que ces facteurs de correction ou de calibrage 3D ne soient pas destinés à une correction directe des activités collectrons brutes, les relations ci-après illustrent le processus de passage d'un signal collectron initial, c'est-à-dire non corrigé de la loi de sensibilité, à un signal ayant la même signification qu'une acquisition RIC.

Soit donc $A_{COL}^{COR}$ la valeur 3D d'une activité collectron corrigée :

$$\boxed{A_{COL}^{COR} = \frac{A_{COL}^{BRUT}}{FCOR}} \qquad \text{Relation 16}$$

Toujours par application de la relation de base du processus 'carte mixte' on peut écrire :

$$A_{PRIC}^{COR} = g \cdot \left[ \frac{A_{RIC}}{A_{COL}} \right]^{CAL} . A_{COL}^{COR} \qquad \text{Relation 17}$$

soit encore, par application de la relation 14 :

$$A_{PRIC}^{COR} = g \cdot \left[ \frac{A_{RIC}}{A_{COL}} \right]^{CAL} . A_{COL}^{BRUT} . \frac{A_{RIC}^{EST}}{A_{PRIC}^{BRUT}}$$

d'où :

$$\boxed{A_{PRIC}^{COR} = A_{RIC}^{EST}} \qquad \text{Relation 18}$$

Cette dernière relation montre bien que les activités collectrons, après évidemment conversion en activités Pseudo RIC, sont calibrées sur les activités reconstruites RIC.

D'un point de vue pratique l'opération de calibrage est plus complexe car l'objectif est alors de corriger l'erreur commise sur les charges intégrées du fait du cumul des erreurs sur le courant. Au moment où la mise en oeuvre de ce calibrage est décidée les facteurs *FCOR* sont destinés à remplacer, via un processus d'équivalences mathématiques, la loi de sensibilité *S*(*t*) présentée à la relation 0 et utilisée dans la relation 0bis pour retrouver le signal qu'aurait eu le collectron non épuisé.

L'incertitude associée à ce calibrage comprend donc, d'une part la composante $T_U^N$ définie pour les cartes mixtes (relation 12) et d'autre part la composante $(R_{U2p}^N)_{RIC}^{Sch\,42}$ définie dans le cadre de l'application de la méthode $R_{U2p}^N$ décrite au paragraphe précédent. D'où :

$$C_U^N = \sqrt{(T_U^N)^2 + \left[ (R_{U2p}^N)_{RIC}^{Sch\,42} \right]^2} \qquad \text{relation 19}$$

Les valeurs de ces deux postes d'incertitude sont respectivement 1.5 % et 1.5 %, d'où la valeur de 2.1 % pour l'incertitude $C_U^N$. La composante d'incertitude intrinsèque $M_U^N$ de début de vie des collectrons étant de 1.93 % cela signifie qu'à partir du moment où le calibrage est activé l'incertitude finale collectrons serait de 2.9 %. Cette dernière valeur est préliminaire mais le fait qu'elle soit très nettement inférieure aux valeurs qu'il faudrait utiliser sans calibrage est un argument fort en faveur de cette approche.

A la figure 4, on a représenté un exemple de mise en oeuvre du procédé selon l'invention en appliquant notamment la méthode de combinaison des cartes de flux mixtes.

Sur cette figure, on a utilisé les abréviations suivantes :

CDFM = Carte De Flux Mixte ; PREP = PREParation ; DET = DETecteur ; A = Activité ; P = Puissance

Sur cette figure, on considère d'une part un premier ensemble de mesures partiel 301, réalisées au moyen d'un premier type de capteurs, ou détecteurs, appartenant à un premier système d'instrumentation INCORE présent dans un coeur du réacteur nucléaire, et d'autre part un deuxième ensemble de mesures partiel 302 réalisées au moyen d'un deuxième type de détecteurs, appartenant à un deuxième système d'instrumentation INCORE. Par ensemble de mesures partiel on désigne les mesures réalisées pour les seuls points du réacteur nucléaire équipé des détecteurs du type de capteur considéré

On considère par ailleurs une première distribution théorique 304 complète, c'est-à-dire fournissant une valeur d'activité pour tout point du coeur de réacteur considéré, disponible pour les détecteurs du premier type, et une deuxième distribution théorique 305 complète disponible pour les détecteurs du deuxième type.

A partir de ces quatre ensembles de données, on réalise, dans une étape suivante, une conversion, pour les points du coeur du réacteur nucléaire instrumentés, des activités associées au deuxième type de détecteurs en activités associées au premier type de détecteurs. Cette conversion, dont le principe repose sur l'hypothèse d'invariance MES/CAL (relation 2) est complètement réalisée après application de la relation 11.

On obtient ainsi un nouvel ensemble de données expérimentales 306, pour tout point instrumenté - que ce soit par des capteurs du premier type ou par des capteurs du deuxième type -, le nouvel ensemble de données expérimentales ne comportant que des valeurs relatives aux activités associées aux capteurs du premier type.

A partir du nouvel ensemble de données expérimentales 306, et en faisant intervenir un ensemble de données théoriques 303 obtenues par un calcul théorique simulant l'état du coeur au moment de la double cartographie, on procède alors à un traitement classique, précédemment rappelé en référence aux figures 1 et 2, d'une carte de flux qui aurait été obtenue exclusivement à partir d'une densité satisfaisante.

La figure 5 illustre l'impact de la mise en oeuvre de la méthode de combinaison des cartes de flux mixtes sur l'évolution de l'incertitude des détecteurs Rhodium : sur cette figure, on a représenté le cas où un calibrage tridimensionnel d'un détecteur de type collectron est réalisé à partir des cartes de flux RIC lorsque l'usure du collectron considéré est voisine de 55%. Ainsi, lorsque le calibrage est réalisé, la composante d'incertitude $M_U^N$ du collectron, en repartant d'un niveau déterminé par la composante d'incertitude de calibrage $C_U^N$, suit la loi d'évolution dictée par la loi de sensibilité, en considérant cette dernière à partir de son origine, c'est-à-dire en repartant de l'instant t initial (t=0).

Entre deux calibrages la loi de correction classique est appliquée avec un changement d'origine. Il est donc clair que ce processus fait disparaître une part importante de la propagation des erreurs initiales par la loi d'usure.

Avantageusement, un seul calibrage est envisagé : à partir de 50 % d'usure. Cela permet alors de fonctionner avec un niveau d'incertitude compatible avec les exigences fonctionnelles requises pendant les 3 à 4 années précédant la décennale de la tranche : lors de l'arrêt correspondant il y aura alors remplacement de tous les collectrons.

Ce calibrage peut également être utilisé en début de chaque cycle, mais alors sans modification des signaux collectrons, pour vérifier le positionnement axial des cannes.

**Revendications**

1. Procédé d'établissement d'une cartographie représentative d'une distribution de puissance au sein d'un coeur de réacteur nucléaire, ladite cartographie étant établie au moyen de détecteurs placés au moins provisoirement dans le coeur du réacteur, qui comporte les différentes étapes consistant à :

    - équiper, au moins provisoirement, un premier ensemble d'assemblages de combustibles du coeur du réacteur nucléaire au moyen de détecteurs d'un premier système d'instrumentation, dit système d'instrumentation de référence ;
    - équiper, au moins provisoirement, un deuxième ensemble d'assemblages de combustibles du coeur du réacteur nucléaire au moyen de détecteurs d'un deuxième système d'instrumentation ;
    - réaliser (301) un premier ensemble de mesures partiel d'activités au moyen des détecteurs du système de référence ;
    - réaliser (302) un deuxième ensemble de mesures partiel d'activités au moyen des détecteurs du deuxième système d'instrumentation ;
    - convertir les mesures d'activités du deuxième ensemble de mesures en mesure d'activités associées au système d'instrumentation de référence, pour obtenir un ensemble de mesures converties ;
    - établir (306), à partir du premier ensemble de mesures partiel d'activités, de l'ensemble de mesures converties, d'une distribution théorique complète des activités théoriques associées au système d'instrumentation de référence, et d'une distribution théorique complète des activités théoriques associées au deuxième système d'instrumentation, pour tout point instrumenté du coeur du réacteur nucléaire, un ensemble final de données expérimentales d'activités du coeur du réacteur, ledit ensemble de données ne comportant que des valeurs relatives aux activités associées au système d'instrumentation de référence ;
- établir (307), à partir de l'ensemble final de données expérimentales et de données théoriques simulant un état du coeur du réacteur au moment de la réalisation du premier ensemble de mesures et du deuxième ensemble de mesures, la cartographie représentative d'une distribution de puissance au sein d'un coeur de réacteur nucléaire.

**2.** Procédé selon la revendication précédente **caractérisé en ce que** l'étape de conversion des mesures d'activités du deuxième ensemble de mesures en mesure d'activités associées au système d'instrumentation de référence obéit à la relation suivante :

$$A_{1 \leftarrow 2}^{CONV} = g \cdot (\frac{A_1}{A_2})^{CAL} \cdot (A_2^{MES})_{relatif}$$

où :

- $A_2^{MES}$ est la distribution des activités mesurées par les détecteurs du deuxième système d'instrumentation, dont les éléments sont liés par une normalisation d'ensemble ;
- $A_1^{CAL}$ et $A_2^{CAL}$ sont les distributions des activités équivalentes calculées pour les détecteurs du premier système d'instrumentation et du deuxième système d'instrumentation respectivement ;
- $A_{1 \leftarrow 2}^{CONV}$ est la conversion d'une activité mesurée par un détecteur du deuxième système d'instrumentation en une activité qui serait détectée par un détecteur du premier système d'instrumentation ;
- $g$ est un coefficient rendant compte des différences de normalisation entre les deux distributions.

**3.** Procédé selon l'une au moins des revendications précédentes **caractérisé en ce que** l'étape de conversion des mesures d'activités du deuxième ensemble de mesures en mesure d'activités associées au système d'instrumentation de référence est suivie par une opération de normalisation obéissant à la relation suivante :

$$A_1^{mixte} = \frac{\sum_1^{N1} (A_1^{MES})_{relatif} + \sum_1^{N2} A_{1 \leftarrow 2}^{CONV}}{N1 + N2}$$

où :

- $N1$ et $N2$ sont les nombres d'acquisitions pour les détecteurs du premier système d'instrumentation et du deuxième système d'instrumentation respectivement ;
- $(A_1^{MES})_{relatif}$ est la distribution des activités mesurées par les détecteurs du premier système d'instrumentation, dont les éléments sont liés par une normalisation d'ensemble ;
- $A_{1 \leftarrow 2}^{CONV}$ est la conversion d'une activité mesurée par un détecteur du deuxième système d'instrumentation en une activité qui serait détectée par un détecteur du premier système d'instrumentation.

**4.** Procédé selon l'une au moins des revendications précédentes **caractérisé en ce que** le système d'instrumentation de référence est un système à détecteurs mobiles.

**5.** Procédé selon l'une au moins des revendications précédentes **caractérisé en ce que** le deuxième système d'instrumentation de référence est un système à détecteurs fixes.

**6.** Procédé selon l'une au moins des revendications précédentes **caractérisé en ce que** le système d'instrumentation de référence est un système de type RIC.

**7.** Procédé selon l'une au moins des revendications précédentes **caractérisé en ce que** le deuxième système d'instrumentation fait intervenir des détecteurs de type collectrons.

**8.** Procédé de correction d'une composante d'incertitude intrinsèque associée à un détecteur de type collectron disposé dans un coeur de centrale nucléaire, **caractérisé en ce qu'**il comporte l'étape consistant à réaliser une opération de calibrage du collectron considéré, l'opération de calibrage étant réalisée lorsque le détecteur de type collectron a atteint un niveau d'usure donné, l'opération de calibrage consistant à réaliser un calibrage tridimensionnel à partir d'une cartographie déterminée, avec un système d'instrumentation de référence faisant intervenir des détecteurs de type détecteurs RIC, par le procédé selon l'une au moins des revendications précédentes.

**9.** Procédé selon la revendication précédente **caractérisé en ce que** l'opération de calibrage comporte les étapes suivantes :

- réalisation d'un calibrage tridimensionnel à partir de cartes de flux déterminées pour des détecteurs de type détecteurs RIC ;
- détermination d'une valeur d'incertitude de calibrage ;
- détermination d'une valeur de composante d'incertitude du détecteur de type collectron considéré au niveau d'usure donné auquel l'opération de calibrage est réalisée, ayant pour valeur la valeur de la composante d'incertitude intrinsèque déterminée pour un détecteur neuf, augmentée de ladite valeur dite d'incertitude de calibrage.

**10.** Procédé selon l'une au moins des revendications 8 ou 9 **caractérisé en ce que** le niveau d'usure donné pour lequel on effectue l'opération de calibrage du collectron considéré est supérieure à 50 % d'usure dudit collectron.


**Patentansprüche**

**1.** Festlegungsverfahren einer eine Leistungsverteilung in einem Kern eines Atomreaktors darstellende Kartografie, wobei die genannte Kartografie mittels Sensoren festgelegt wird, die wenigstens provisorisch im Kern des Reaktors platziert sind, und das die verschiedenen Stufen umfasst, bestehend aus:

- wenigstens provisorisch Ausrüsten einer ersten Montagegruppe aus Brennstoffen des Kerns des Atomreaktors anhand von Sensoren eines ersten Instrumentierungssystems, bezeichnet als Referenzinstrumentierungssystem;
- wenigstens provisorisch Ausrüsten einer zweiten Montagegruppe aus Brennstoffen des Kerns des Atomreaktors anhand von Sensoren eines zweiten Instrumentierungssystems;
- Realisieren (301) einer ersten Mess-Teilgruppe der Aktivitäten wenigstens der Sensoren des Referenzsystems;
- Realisieren (302) der zweiten Mess-Teilgruppe der Aktivitäten anhand der Sensoren des zweiten Instrumentierungssystems;
- Konvertieren der Aktivitätsmessungen der zweiten Messgruppe in Aktivitätsmessungen, die dem Referenzinstrumentierungssystem zugeordnet sind, um eine Gruppe von konvertierten Messungen zu erhalten;
- ab der ersten Mess-Teilgruppe der Aktivitäten aus der Gruppe der konvertierten Messungen einer theoretischen kompletten Verteilung der dem Referenzinstrumentierungssystem zugeordneten theoretischen Aktivitäten und einer theoretischen kompletten Verteilung der dem zweiten Instrumentierungssystem zugeordneten theoretischen Aktivitäten für jeden instrumentierten Punkt des Kerns des Atomreaktors Festlegen (306) eine endgültige Gruppe von experimentellen Daten der Aktivitäten des Kerns des Atomreaktors, wobei die genannte Datengruppe nur Werte bezüglich der dem Referenzinstrumentierungssystem zugeordneten Aktivitäten umfasst;
- ab der endgültigen Gruppe von experimentellen Daten und theoretischen Daten, die einen Zustand des Kerns des Reaktors zum Zeitpunkt der Realisierung der ersten Messgruppe und der zweiten Messgruppe Festlegen (307) der Kartografie, die eine Leistungsverteilung innerhalb eines Kerns eines Atomreaktors darstellt.

**2.** Verfahren gemäß dem voranstehenden Anspruch, **dadurch gekennzeichnet, dass** die Konvertierungsstufe der Aktivitätsmessungen der zweiten Messgruppe in dem Referenzinstrumentierungssystem zugeordneten Aktivitätsmessungen der folgenden Beziehung gehorcht:

$$A_{1 \leftarrow 2}^{Konvertieren} = g \cdot \left(\frac{A_1}{A_2}\right)^{Berechnen} \cdot (A_2^{Messen})_{relativ}$$

In der:

- $A_2^{Messen}$ die Verteilung der Aktivitäten ist, die von den Sensoren des zweiten Instrumentierungssystems gemessen werden, deren Elemente durch eine Gruppenormalisierung verbunden sind;

- $A_1^{Berechnen}$ und $A_2^{Berechnen}$ die Verteilungen der äquivalenten Aktivitäten sind, die für die Sensoren des jeweils ersten Instrumentierungssystems und des zweiten Instrumentierungssystems berechnet sind;

- $A_{1\leftarrow2}^{Konvertieren}$ die Konvertierung einer Aktivität ist, die von einem Sensor des zweiten Instrumentierungssystems in eine Aktivität gemessen wird, die von einem Sensor des ersten Instrumentierungssystems erfasst wird;

- g ein Koeffizient ist, der die Normalisierungsdifferenzen zwischen den zwei Verteilungen wiedergibt.

**3.** Verfahren gemäß wenigstens einem der voranstehenden Ansprüche, **dadurch gekennzeichnet, dass** auf die Konvertierungsstufe der Aktivitätsmessungen der zweiten Messgruppe in Aktivitäten, die dem Referenzinstrumentierungssystem zugeordnet sind eine Normalisierungsoperation folgt, die der folgenden Beziehung unterliegt:

$$A_1^{gemischt} = \frac{\sum_1^{N1}(A_1^{Messen})_{relativ} + \sum_1^{N2} A_{1\leftarrow2}^{Konvertieren}}{N1 + N2}$$

in der:

- N1 und N2 die Erwerbsnummern für die Sensoren jeweils des ersten Instrumentierungssystems und des zweiten Instrumentierungssystems sind;

- $\left(A_1^{Messen}\right)_{relativ}$ die Verteilung der Aktivitäten ist, die von den Sensoren des ersten Instrumentierungssystems gemessen werden, deren Elemente durch eine Gruppennormalisierung verbunden sind;

- $A_{1\leftarrow2}^{Konvertieren}$ die Konvertierung einer Aktivität ist, die von einem Sensor des zweiten Instrumentierungssystems in eine Aktivität gemessen wird, die von einem Sensor des ersten Instrumentierungssystems erfasst wird.

**4.** Verfahren gemäß wenigstens einem der voranstehenden Ansprüche, **dadurch gekennzeichnet, dass** das Referenzinstrumentierungssystem ein System mit mobilen Sensoren ist.

**5.** Verfahren gemäß wenigstens einem der voranstehenden Ansprüche, **dadurch gekennzeichnet, dass** das zweite Referenzinstrumentierungssystem ein System mit festen Sensoren ist.

**6.** Verfahren gemäß wenigstens einem der voranstehenden Ansprüche, **dadurch gekennzeichnet, dass** das Referenzinstrumentierungssystem ein System vom Typ RIC ist.

**7.** Verfahren gemäß wenigstens einem der voranstehenden Ansprüche, **dadurch gekennzeichnet, dass** beim zweiten Instrumentierungssystem Sensoren vom Typ Collectron zum Einsatz kommen.

**8.** Korrekturverfahren einer intrinsischen Unsicherheitskomponente, die einem Sensor vom Typ Collectron zugeordnet ist, der in einem Kern eines Atomreaktors angeordnet ist, **dadurch gekennzeichnet, dass** es die Stufe umfasst, die in der Realisierung einer Kalibrierungsoperation des betrachteten Collectrons besteht, wobei die Kalibrierungsoperation realisiert wird, wenn der Sensor vom Typ Collectron ein bestimmtes Abnutzungsniveau erreicht hat, wobei die Kalibrierungsoperation in der Realisierung einer dreidimensionalen Kalibrierung ab einer bestimmten Kartografie mit einem Referenzinstrumentierungssystem besteht, bei dem Sensoren vom Typ RIC-Sensoren durch das Verfahren gemäß wenigstens einem der voranstehenden Ansprüche zum Einsatz kommen.

**9.** Verfahren gemäß dem voranstehenden Anspruch, **dadurch gekennzeichnet, dass** die Kalibrierungsoperation die folgenden Stufen umfasst:

- Realisierung einer dreidimensionalen Kalibrierung ab für Sensoren vom Typ RIC-Sensoren bestimmte Flusskarten;
- Bestimmung eines Unsicherheitswertes der Kalibrierung;

- Bestimmung eines Wertes der Unsicherheitskomponente des Sensors vom betrachteten Typ Collectron für das bestimmte Abnutzungsniveau, auf das die Kalibrierungsoperation realisiert wird, dessen Wert der Wert der intrinsischen Unsicherheitskomponente ist, die für einen neuen Sensor bestimmt wird, zuzüglich des genannten Wertes, bezeichnet als Kalibrierungsunsicherheit.

**10.** Verfahren gemäß wenigstens Anspruch 8 oder 9, **dadurch gekennzeichnet, dass** das bestimmte Abnutzungsniveau, für das die Kalibrierungsoperation des betrachteten Collectrons durchgeführt wird, größer als 50 % Abnutzung des genannten Collectrons ist.

**Claims**

**1.** A method for establishing a representative mapping of a power distribution within a nuclear reactor core, said mapping being established by means of sensors placed at least temporarily in the reactor core, which includes the different steps of:

- equipping, at least temporarily, a first set of fuel assemblies of the nuclear reactor core with sensors of a first instrumentation system, known as a reference instrumentation system;
- equipping, at least temporarily, a second set of fuel assemblies of the nuclear reactor core with sensors of a second instrumentation system;
- performing (301) a first partial set of activity measurements by means of the sensors of the reference system;
- performing (302) a second partial set of activity measurements by means of the sensors of the second instrumentation system;
- converting the activity measurements of the second set of measurements into activity measurements associated with the reference instrumentation system, in order to obtain a set of converted measurements;
- establishing (306), from the first partial set of activity measurements, from the set of converted measurements, from a complete theoretical distribution of the theoretical activities associated with a reference instrumentation system, and from a complete theoretical distribution of the theoretical activities associated with the second instrumentation system, for any instrumented point of the nuclear reactor core, a final set of activity experimental data of the reactor core, said set of data including only values related to the activities associated with the reference instrumentation system;
- establishing (307), from the final set of experimental data and of theoretical data simulating a state of the reactor core at the time of performing the first set of measurements and the second set of measurements, the representative mapping of a power distribution within a nuclear reactor core.

**2.** The method according to the preceding claim, **characterised in that** the step of converting the activity measurements of the second set of measurements into activity measurements associated with the reference instrumentation system satisfies the following relationship:

$$A_{1 \leftarrow 2}^{CONV} = g \cdot \left( \frac{A_1}{A_2} \right)^{CAL} \cdot \left( A_2^{MEAS} \right)_{related}$$

where:

- $A_2^{MEAS}$ is the distribution of the activities measured by the sensors of the second instrumentation system, the elements of which are linked by a global normalization;

- $A_1^{CAL}$ and $A_2^{CAL}$ are the equivalent activity distributions calculated for the sensors of the first instrumentation system and of the second instrumentation system, respectively;

- $A_{1 \leftarrow 2}^{CONV}$ is the conversion of an activity measured by a sensor of the second instrumentation system into an activity which would be detected by a sensor of the first instrumentation system;
- $g$ is a coefficient reporting normalization differences between both distributions.

**3.** The method according to at least one of the preceding claims, **characterised in that** the step of converting the activity measurements of the second set of measurements into activity measurements associated with the reference instrumentation system is followed by a normalization operation satisfying the following relationship:

$$A_1^{mixed} = \frac{\sum_1^{N1}(A_1^{MEAS})_{related} + \sum_1^{N2} A_{1\leftarrow 2}^{CONV}}{N1 + N2}$$

where:

- N1 and N2 are the acquisition numbers for the sensors of the first instrumentation system and of the second instrumentation system, respectively;

- $(A_1^{MEAS})_{related}$ is the distribution of the activities measured by the sensors of the first instrumentation system, the elements of which are linked by a global normalization;

- $A_{1\leftarrow 2}^{CONV}$ is the conversion of an activity measured by a sensor of the second instrumentation system into an activity which would be detected by a sensor of the first instrumentation system.

4.  The method according to at least one of the preceding claims, **characterised in that** the reference instrumentation system is a system with mobile sensors.

5.  The method according to at least one of the preceding claims, **characterised in that** the second reference instrumentation system is a system with stationary sensors.

6.  The method according to at least one of the preceding claims, **characterised in that** the reference instrumentation system is an RIC-type system.

7.  The method according to at least one of the preceding claims, **characterised in that** the second instrumentation system implies collectron-type sensors.

8.  A method for correcting an intrinsic uncertainty component associated with a collectron-type sensor placed in a nuclear power plant core, **characterised in that** it includes the step of performing an operation for calibrating the considered collectron, the calibrating operation being performed when the collectron-type sensor has reached a given wear level, the calibrating operation consisting in performing a three-dimensional calibration from a determined mapping, with a reference instrumentation system implying RIC-type sensors, by the method according to at least one of the preceding claims.

9.  The method according to the preceding claim, **characterised in that** the calibrating operation includes the following steps:

    - performing a three-dimensional calibration from flux maps determined for RIC-type sensors;
    - determining a calibration uncertainty value;
    - determining an uncertainty component value of the considered collectron-type sensor at the given wear level at which the calibrating operation is performed, having as a value the intrinsic uncertainty component value determined for a new sensor, increased by said value known as the calibration uncertainty value.

10. The method according to at least one of claims 8 or 9, **characterised in that** the given wear level for which the operation for calibrating the considered collectron is performed is greater than 50% wear of said collectron.

**Fig. 1**

**Fig. 2**

Fig. 4

Fig. 3

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0323280 A